# EUROPÄISCHE PATENTSCHRIFT

(11) **EP 2 352 935 B1**
(45) Veröffentlichungstag und Bekanntmachung des Hinweises auf die Patenterteilung: **15.08.2012**
(21) Anmeldenummer: 09771487.7
(22) Anmeldetag: 29.10.2009
(51) Int. Cl.: F16H 9/18, F16H 61/662, F16G 5/18

(54) **SCHEIBENSATZANORDNUNG FÜR EIN KETTEN-CVT MIT EINER FUNKTIONSOPTIMIERTEN SCHEIBENSATZKONTUR**
DISK SET ARRANGEMENT FOR A CHAIN CVT HAVING A FUNCTION-OPTIMIZED DISK SET CONTOUR
AGENCEMENT D'ENSEMBLES DE POULIES POUR UNE TRANSMISSION A VARIATION CONTINUE A CHAINE PRESENTANT UN PROFIL D'ENSEMBLE DE POULIES FONCTIONNELLEMENT OPTIMISE

(30) Priorität: 03.11.2008 DE 102008054327; 15.01.2009 DE 102009004708
(43) Veröffentlichungstag der Anmeldung: 10.08.2011
(73) Patentinhaber: Schaeffler Technologies AG & Co. KG, 91074 Herzogenaurach (DE)
(72) Erfinder: ENDLER, Thomas, 77836 Rheinmünster (DE); RICKLING, Nicolas, 67850 Offendorf (FR)
(86) Internationale Anmeldenummer: PCT/DE2009/001533
(87) Internationale Veröffentlichungsnummer: WO 2010/060406

(56) Entgegenhaltungen:
- EP-A2- 1 441 151
- WO-A1-2006/049493
- WO-A1-2007/055560
- DE-A1- 10 003 131
- DE-A1- 10 235 342
- DE-A1-102005 037 941
- GB-A- 2 169 043
- JP-A- 2002 031 215

## Beschreibung

Die vorliegende Erfindung betrifft eine Scheibensatzanordnung mit einem ersten Antriebs-Scheibensatz und einem zweiten Abtriebs-Scheibensatz für ein Ketten-CVT mit einer funktionsoptimierten Scheibensatzkontur.

Aus der gattungsgemäßen DE 10 2005 037 941 A1 geht ein Kegelscheibenumschlingungsgetriebe hervor, das im Wesentlichen einen antriebsseitigen und einen abtriebsseitige Scheibensatz aufweist, wobei jeder Scheibensatz eine Festscheibe und eine Wegscheibe besitzt, die jeweils auf einer antriebsseitigen bzw. einer abtriebsseitigen Welle angeordnet und über eine Kettenanordnung zur Drehmomentübertragung miteinander verbunden sind.

Derzeit sind einerseits Scheibensätze mit gewölbten Scheiben und einer angepassten Kettenkontur der Wiegedruckstücke der Kettenanordnung und andererseits geradlinige Scheibensätze, also Scheiben, deren Flanken keine Wölbung aufweist, bekannt.

Da sich bei Scheibensätzen mit gewölbten Scheiben der Scheibensatzwinkel zwischen dem kleinsten und dem größten Laufkreis in Abhängigkeit vom gewählten Scheibensatzradius ändert, besteht ein Problem darin, dass bei der Auslegung der angepassten Kettenkontur sorgsam darauf geachtet werden muss, dass es nicht zu sogenannten Kantenträgern und damit zu einer erhöhten tribologischen Belastung kommt, weil die Druckellipse nicht vollständig auf dem Wiegestück der Kettenanordnung liegt.

Ein Problem von Scheibensätzen mit geradlinigen Scheiben besteht darin, dass ein erhöhter Stützungsbedarf zum Stützen der Scheiben gegenüber einer Druckbeaufschlagung durch die Kettenanordnung erforderlich ist, wobei sich der Stützungsbedarf zwischen einer kleinsten Stützung im Underdrive und einer maximalen Stützung im Overdrive unterscheidet. Dies ist in beiden Fällen für die Auslegung der Leistungsaufnahme der Hydraulik ungünstig. Zudem führen geradlinige Scheibensätze zu einem erhöhten Spurversatz.

Die Aufgabe der vorliegenden Erfindung besteht daher darin, einen Scheibensatz so auszugestalten, dass seine Scheiben die Vorteile eines geradlinigen Scheibensatzes mit denjenigen eines gewölbten Scheibensatzes verbinden.

Diese Aufgabe wird durch eine Scheibensatzanordnung mit einem ersten Antriebs-Scheibensatz und einem zweiten Abtriebs-Scheibensatz für ein Ketten-CVT mit einer funktionsoptimierten Scheibensatzkontur gelöst, wobei die Scheibensatzanordnung jeweils zwei auf einer Welle axial gegeneinander verschiebbare Scheiben und eine Kettenanordnung mit zwischen diesen Scheiben wirksamen Wiegedruckstücken umfasst, deren Längsachse parallel zur Rotationsachse der Welle verläuft. Dabei wird die Wölbung der Scheiben zumindest eines der Scheibensätze durch ein Verhältnis zwischen der Exzentrizität der Scheibenwölbung und dem Scheibensatzradius bestimmt, das in einem Bereich von 0,16 bis 0,20 liegt, wobei die Exzentrizität der Scheibenwölbung durch einen Punkt bestimmt ist, der eine senkrecht zur Rotationsachse der Scheiben verlaufende erste Strecke von der Rotationsachse der Scheiben entfernt ist und von dem aus der die Wölbung der einander zugewandten Seiten der Scheiben bestimmende Scheibensatzradius gemessen wird, wobei der Scheibensatzradius über die Rotationsachse verläuft. Die Wölbung der Wiegedruckstücke wird durch ein erstes Verhältnis zwischen einer ersten Exzentrizität der Wiegedruckstücke und einem ersten Wiegedruckstückradius, das in einem Bereich von 0,185 bis 0,205 liegt, wobei der erste Wiegedruckstückradius von einem ersten Punkt aus gemessen wird, der eine senkrecht zur Längsachse der Wiegedruckstücke verlaufende erste Strecke von der Längsachse entfernt ist, und durch ein zweites Verhältnis bestimmt, das zwischen einer zweiten Exzentrizität der Wiegedruckstücke und einem zweiten Wiegedruckstückradius in der Azimutalrichtung besteht und in einem Bereich von 0 bis 0,015 liegt, wobei der zweite Wiegedruckstückradius von einem zweiten Punkt aus gemessen wird, der eine der zweiten Exzentrizität der Wiegedruckstücke entsprechende Strecke von der Längsachse entfernt ist, die senkrecht zur Längsachse sowie senkrecht zur ersten Strecke verläuft.

Der wesentliche Vorteil der vorliegenden Erfindung besteht darin, dass die Scheiben mit funktionsoptimierter Kontur der vorliegenden Scheibensätze so ausgebildet sind, dass die Vorteile von gewölbten Scheibensätzen, die einen geringen Spurversatz und einen geringeren Stützungsbedarf, insbesondere im Overdrive erfordern, wodurch niedrige Drücke und damit eine geringere Leistungsaufnahme der Hydraulik ermöglicht werden, mit denjenigen von geradlinigen Scheibensätzen, insbesondere im Hinblick auf den Variatorwirkungsgrad verbunden sind. Besonders bevorzugt liegt die Exzentrizität der Scheibenwölbung in einem Bereich von 895 mm bis 905 mm. Insbesondere beträgt sie 900 mm. Der Scheibensatzradius liegt vorzugsweise zwischen 2000 mm und 10000 mm, insbesondere zwischen 4000 mm und 6000 mm. Bei einer besonders bevorzugten Ausführungsform beträgt er 5000 mm.

Die Wölbung der Wiegedruckstücke wird vorzugsweise durch eine der ersten Exzentrizität der Wiegedruckstücke entsprechende Strecke von 39,19 mm und einen ersten Wiegedruckstückradius von 200 mm und durch eine der zweiten Exzentrizität der Wiegedruckstücke entsprechende Strecke von 0,35 mm und einen zweiten Wiegedruckstückradius von 80 mm bestimmt.

Entsprechend einer Ausgestaltung der Erfindung sind sowohl die Scheiben des Antriebs- als auch die Scheiben des Abtriebsscheibensatzes mit einer funktionsoptimierten Kontur versehen.

Mit besonderem Vorteil kann auch ein Scheibensatz mit funktionsoptimierter Kontur mit einem geradlinigen Scheibensatz in einem Variator kombiniert werden. Beispielsweise sind die Scheiben des Antriebs-Scheibensatzes mit der erfindungsgemäßen Wölbung versehen, während die Scheiben des Abtriebs-Scheibensatzes geradlinig ausgebildet sind und umgekehrt. Bevorzugt wird jedoch die erste genannte Kombination, da der Antriebs-Scheibensatz aufgrund eines verringerten Anpresskraftbedarfs den Wirkungsgrad dominiert und der Abtriebs-Scheibensatz häufig den größeren Einfluss auf die Akustik des Getriebes hat. Die Scheibensatzanordnung mit dem geradlinigen Scheibensatz im Abtrieb weist also in den meisten Fällen die größten Vorteile auf.

Auch wenn ein gewölbter Scheibensatz mit funktionsoptimierter Kontur mit einem geradlinigen Scheibensatz in einem Variator kombiniert wird, erfolgt die Drehmomentübertragung zwischen den Scheibensätzen mittels einer Kette mit an dem gewölbten Scheibensatz angepassten Wiegedruckstücken.

Bei den geradlinigen Scheibensätzen werden Flankenwinkel von etwa 11° bevorzugt, das heißt, die beiden Scheiben eines solchen Scheibensatzes schließen einen Öffnungswinkel von etwa 22° zwischen sich ein.

Die Scheibensatzanordnung umfasst bevorzugt eine Festscheibe und eine Wegscheibe.

Im Folgenden werden die Erfindung und deren Ausgestaltungen im Zusammenhang mit den Figuren näher erläutert. Es zeigen:
- Figur 1: in schematischer Darstellung einen Antriebs-Scheibensatz zur Erläuterung der Konturen der Scheiben,
- Figur 2: eine schematische Darstellung zur Erläuterung der Kontur der Wiegedruckstücke und
- Figur 3: eine schematische Prinzipdarstellung eine bekannten Kegelscheibenumschlingungsgetriebes mit zugehöriger Steuerungseinrichtung.

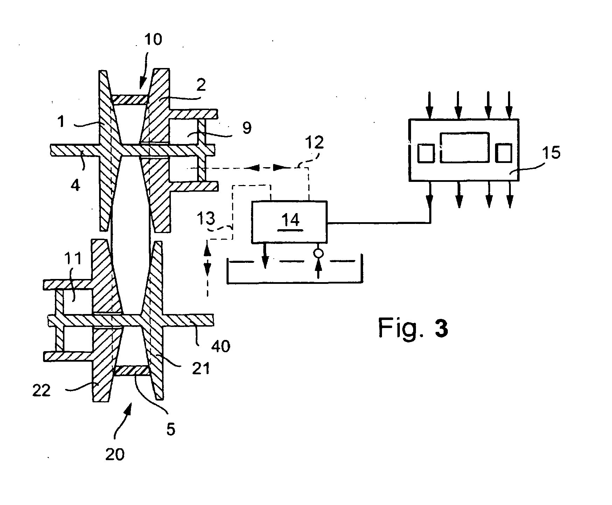

Anhand der Figur 3 wird zum besseren Verständnis der Erfindung und zur Verdeutlichung der verwendeten Begriffe ein Kegelscheibenumschlingungsgetriebe (Ketten-CVT) nach Stand der Technik erläutert. Das Ketten-CVT weist zwei Kegelscheibenpaare, nämlich einen Antriebs-Scheibensatz 10 und einen Abtriebsscheibensatz 20 auf. Eine Festscheibe 1 des AntriebsScheibensatzes 10 ist starr mit einer Antriebswelle 4 verbunden, die beispielsweise von einem Verbrennungsmotor angetrieben wird. Eine Festscheibe 21 des anderen Kegelscheibenpaars, nämlich des Abtriebsscheibensatzes 20 ist starr mit einer Abtriebswelle 40 verbunden, die das Fahrzeug antreibt. Die andere Kegelscheibe, nämlich eine Wegscheibe 2 des AntriebsScheibensatzes 10 ist drehfest, jedoch axial verschiebbar mit der Antriebswelle 4 verbunden. Die andere Kegelscheibe 22 des Abtriebs-Scheibensatzes 20 ist drehfest und axial verschiebbar mit der Abtriebswelle 40 verbunden. Um beide Scheibensätze 10 und 20 läuft ein Umschlingungsmittel, beispielsweise eine Kettenanordnung 5, das in Reibeingriff mit den einander zugewandten Kegelflächen der Kegelscheiben ist. Durch gegensinnige Verstellung des axialen Abstandes zwischen den beiden Kegelscheiben jedes Kegelscheibenpaares lässt sich das Drehzahlverhältnis zwischen den beiden Kegelscheibenpaaren und damit die Übersetzung des Getriebes ändern. Zur Übersetzungsverstellung dienen beispielsweise Druckkammern 9 und 11, die über Hydraulikleitungen 12 und 13 mit einer Steuerventileinheit 14 verbunden sind, mittels der die Beaufschlagung der Druckkammern 9 und 11 mit Hydraulikmitteldruck zur Übersetzungsverstellung steuerbar ist. Zur Ansteuerung der Steuerventileinheit 14 dient ein Steuergerät 15, das einen Mikroprozessor mit zugehörigen Speichereinrichtungen enthält und dessen Eingänge beispielsweise mit einer Wählhebeleinheit zur Betätigung des Getriebes, einem Fahrpedal, Drehzahlsensoren usw. verbunden sind und dessen Ausgänge beispielsweise mit einer Kupplung, einem Leistungsstellglied des nicht dargestellten Motors und der Steuerventileinheit 14 verbunden sind. Aufbau und Funktion eines Kegelscheibenumschlingungsgetriebes sind an sich bekannt und werden daher nicht weiter erläutert.

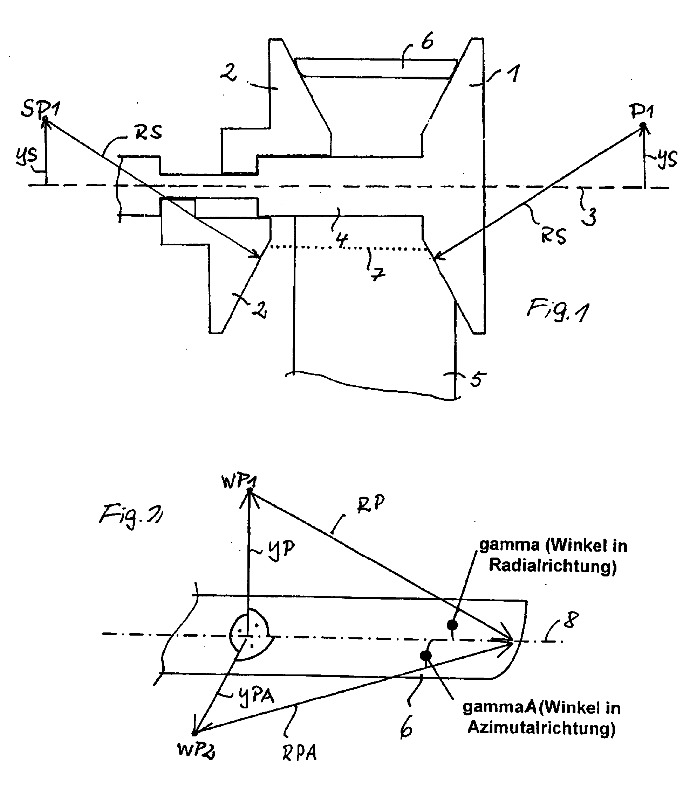

Die Figur 1 zeigt in schematischer Darstellung einen Antriebs-Scheibensatz mit einer funktionsoptimierten Kontur für ein Ketten-CVT (Continious Variable Transmission), der im Wesentlichen eine Festscheibe 1 und eine Wegscheibe 2 aufweist, wobei in der Figur 1 oberhalb der Rotationsachse 3 der Welle 4 die Wegscheibe 2 in der der Festscheibe 2 nächstliegenden Position und unterhalb der Rotationsachse 3 der Welle 4 die Wegscheibe 2 in der der Festscheibe 1 entferntesten Position dargestellt ist. Die zwischen der Festscheibe 1 und der Wegscheibe 2 gezeigte Kettenanordnung ist mit 5 bezeichnet. Dabei ist insbesondere im Querschnitt ein Wiegedruckstück 6 der Kettenanordnung 5 dargestellt.

In der oberhalb der Rotationsachse 3 der Welle 4 dargestellten Position der Wegscheibe 2 befinden sich das Wiegedruckstücke 6 in der Overdrive-Position, während die punktierte Linie 7 unterhalb der Rotationsachse 3 der Welle 4 die Lage der Wiegedruckstücke 6 dann in der Underdrive-Position zeigt.

Die soweit beschriebene Scheibensatzanordnung ist bekannt.

Die vorliegende Erfindung betrifft die konkrete Scheibenkontur der Festscheibe 1 sowie der Wegscheibe 2 des vorliegenden Scheibensatzes sowie die daran angepasste Kontur der Wiegedruckstücke 6 der Kettenanordnung 5.

Für die Bezeichnung der genannten Scheibensatzkontur sind für die Festscheibe 1 sowie für die Wegscheibe 2 der Scheibensatzradius RS der Wölbung sowie die Exzentrizität YS der Scheibensatzwölbung maßgeblich. Dabei wird der Scheibensatzradius von einem Punkt SP1 aus gemessen, der von der Rotationsachse eine der Exzentrizität YS entsprechende, senkrecht zur Rotationsachse 3 gemessene Strecke entfernt ist. Dabei verläuft der Scheibensatzradius RS über die Rotationsachse.

Erfindungsgemäß liegt nun das Verhältnis zwischen der Exzentrizität YS und dem Scheibensatzradius RS in einem Bereich von 0,16 bis 0,20. Vorzugsweise beträgt die Exzentrizität YS 895 mm bis 905 mm, insbesondere 900 mm. Der Scheibensatzradius RS beträgt vorzugsweise 2000 mm bis 10000 mm, insbesondere 4000 mm bis 6000 mm. Vorzugsweise beträgt er 5000 mm.

Die Figur 2 zeigt die auf diese Scheibensatzkontur der Festscheibe 1 und der Wegscheibe 2 abgestimmte Kontur der Wiegedruckstücke 6 der Kettenanordnung 5. Dabei wird die Wölbung der Wiegedruckstücke 6 durch einen ersten Wiegedruckradius RP und einen zweiten Wiegedruckradius RPA bestimmt. Der erste Wiegedruckradius RP wird von einem ersten Punkt WP1 aus gemessen, der entsprechend einer ersten Exzentrizität YP von der Längsachse 8 der Wiegedruckstücke 6 eine erste, senkrecht zur Längsachse 8 verlaufende Strecke beabstandet ist. Der zweite, in der Azimutalrichtung verlaufende Wiegedruckradius RPA wird von einem zweiten Punkt WP2 aus gemessen, der entsprechend einer zweiten Exzentrizität YPA von der Längsachse 8 der Wiegedruckstücke eine zweite Strecke beabstandet ist, die senkrecht zur Längsachse 8 und zudem senkrecht zur ersten Strecke verläuft.

Erfindungsgemäß liegt das Verhältnis zwischen der ersten Exzentrizität YP und dem ersten Wiegedruckradius RP in einem Bereich von 0,185 bis 0,205 und liegt das Verhältnis zwischen der zweiten Exzentrizität YPA und dem zweiten Wiegedruckradius RPA zwischen 0 bis 0,015. Besonders bevorzugt betragen der erste Wiegedruckradius RP 200 mm und der zweite Wiegedruckradius 39,19 mm. Dies entspricht einem Winkel γ in der Radialrichtung zwischen der Längsachse 8 und der Strecke YP von 11,30°. Vorzugsweise betragen die zweite Exzentrizität YPA 0,35 mm und er zweite Wiegedruckradius RPA 80 mm. Dies entspricht einem Winkel γA in der Azimutalrichtung von 0,25°.

### Bezugszeichenliste

- 1: Festscheibe
- 2: Wegscheibe
- 3: Rotationsachse
- 4: Antriebswelle
- 5: Kettenanordnung
- 6: Wiegedruckstück
- 7: Linie
- 8: Längsachse
- 9: Druckkammern
- 10: Antriebs-Scheibensatz
- 12.: Hydraulikleitung
- 13.: Hydraulikleitung
- 14.: Steuerventileinheit
- 15.: Steuergerät
- 20.: Abtriebs-Scheibensatz
- 21.: Festscheibe
- 22.: Kegelscheibe
- 40.: Abtriebswelle

- YS: Exzentrizität
- RS: Scheibensatzradius
- YP: Exzentrizität
- RP: Wiegestückradius
- YPA: Exzentrizität
- RPA: Wiegestückradius
- SP1: Punkt
- WP1: Punkt
- WP2: Punkt
- γ: Winkel
- γA: Winkel

## Patentansprüche

1. Scheibensatzanordnung mit einem ersten Antriebs-Scheibensatz und einem zweiten Abtriebs-Scheibensatz für ein Ketten-CVT mit einer funktionsoptimierten Scheibensatzkontur, wobei die Scheibensätze der Scheibensatzanordnung jeweils zwei auf einer Welle (4) axial gegeneinander verschiebbare Scheiben (1, 2) und eine Kettenanordnung (5) mit zwischen diesen Scheiben (1, 2) wirksamen Wiegedruckstücken (6) umfasst, deren Längsachse (8) parallel zur Rotationsachse (3) der Welle (4) verläuft, **dadurch gekennzeichnet, dass**
die Wölbung der Scheiben (1, 2) zumindest eines der Scheibensätze durch ein Verhältnis zwischen der Exzentrizität (YS) der Scheibenwölbung und dem Scheibensatzradius (RS) bestimmt wird, das in einem Bereich von 0,16 bis 0,20 liegt, wobei die Exzentrizität (YS) der Scheibenwölbung durch einen Punkt (SP1) bestimmt ist, der eine senkrecht zur Rotationsachse (3) der Scheiben (1, 2) verlaufende erste Strecke von der Rotationsachse (3) der Scheiben (1, 2) entfernt ist und von dem aus der die Wölbung der einander zugewandten Seiten der Scheiben (1, 2) bestimmende Scheibensatzradius (RS) gemessen wird, wobei der Scheibensatzradius (RS) über die Rotationsachse (3) verläuft, und dass
die Wölbung der Wiegedruckstücke (6) durch ein erstes Verhältnis zwischen einer ersten Exzentrizität (YP) der Wiegedruckstücke und einem ersten Wiegedruckstückradius (RP), das in einem Bereich von 0,185 und 0,205 liegt, wobei der erste Wiegedruckstückradius (RP) von einem ersten Punkt (WP1) aus gemessen wird, der eine senkrecht zur Längsachse (8) der Wiegedruckstücke (6) verlaufende erste Strecke von der Längsachse (8) entfernt ist, und durch ein zweites Verhältnis bestimmt wird, das zwischen einer zweiten Exzentrizität (YPA) der Wiegedruckstücke und einem zweiten Wiegedruckstückradius (RPA) in der Azimutalrichtung bestimmt wird, das in einem Bereich von 0 und 0,015 liegt, wobei der zweite Wiegedruckstückradius (RPA) von einem zweiten Punkt (WP2) aus gemessen wird, der eine der zweiten Exzentrizität (YPA) der Wiegedruckstücke entsprechende Strecke von der Längsachse (8) entfernt ist, die senkrecht zur Längsachse (8) sowie senkrecht zur ersten Strecke verläuft.

2. Scheibensatzanordnung nach Anspruch 1, **dadurch gekennzeichnet, dass** die Exzentrizität (YS) der Scheibenwölbung in einem Bereich von 895 mm bis 905 mm liegt.

3. Scheibensatzanordnung nach Anspruch 2, **dadurch gekennzeichnet, dass** die Exzentrizität (YS) 900 mm beträgt.

4. Scheibensatzanordnung nach einem der Ansprüche 1 bis 3, **dadurch gekennzeichnet, dass** der Scheibensatzradius (RS) zwischen 2000 mm und 10000 mm liegt.

5. Scheibensatzanordnung nach Anspruch 4, **dadurch gekennzeichnet, dass** der Scheibensatzradius 4000 mm bis 6000 mm beträgt.

6. Scheibensatzanordnung nach Anspruch 5, **dadurch gekennzeichnet, dass** der Scheibensatzradius 5000 mm beträgt.

7. Scheibensatzanordnung nach einem der Ansprüche 1 bis 6, **dadurch gekennzeichnet, dass** die Wölbung der Wiegedruckstücke (6) durch eine der ersten Exzentrizität (YP) der Wiegedruckstücke entsprechende Strecke von 39,19 mm und einen erste Wiegedruckstückradius (RP) von 200 mm und durch eine der zweiten Exzentrizität (YPA) der Wiegedruckstücke entsprechende Strecke von 0,35 mm und einen zweiten Wiegedruckstückradius (RPA) von 80 mm bestimmt ist.

8. Scheibensatzanordnung nach einem der Ansprüche 1 bis 7, **dadurch gekennzeichnet, dass** die Wölbung des ersten Antriebsscheibensatzes und die Wölbung des zweiten Abtriebs-Scheibensatzes funktionsoptimiert sind.

9. Scheibensatzanordnung nach einem der Ansprüche 1 bis 7, **dadurch gekennzeichnet, dass** die Wölbung des ersten Antriebsscheibensatzes funktionsoptimiert ist und der zweite Abtriebs-Scheibensatz geradlinige Flanken aufweist.

10. Scheibensatzanordnung nach einem der Ansprüche 1 bis 7, **dadurch gekennzeichnet, dass** der erste Antriebs-Scheibensatz geradlinige Flanken aufweist und die die Wölbung des zweiten Abtriebs-Scheibensatzes funktionsoptimiert ist.

11. Scheibensatzanordnung nach einem der Ansprüche 8 bis 10, **dadurch gekennzeichnet, dass** die geradlinige Flanke und eine Senkrechte zur Drehachse des Scheibesatzes einen Winkel zwischen 9° und 13°, vorzugsweise 11° einschließen.

12. Scheibensatzanordnung nach einem der Ansprüche 1 bis 11, **dadurch gekennzeichnet, dass** sie eine Festscheibe (1) und eine Wegscheibe (2) umfasst.

13. Ketten-CVT-Getriebe, **dadurch gekennzeichnet, dass** es eine Scheibensatzanordnung nach einem der Ansprüche 1 bis 12 enthält.

## Claims

1. Disc set arrangement having a first drive input disc set and a second drive output disc set for a chain-type CVT, having a functionally optimized disc set contour, wherein the disc sets of the disc set arrangement comprise in each case two discs (1, 2), which are moveable axially with respect to one another on a shaft (4), and a chain arrangement (5) having cradle thrust pieces (6) which act between these discs (1, 2) and the longitudinal axis (8) of which extends parallel to the rotation axis (3) of the shaft (4), **characterized in that**
the curvature of the discs (1, 2) of at least one of the disc sets is determined by a ratio between the eccentricity (YS) of the disc curvature and the disc set radius (RS), said ratio lying in a range of from 0.16 to 0.20, wherein the eccentricity (YS) of the disc curvature is determined by a point (SP1) which is remote from the rotation axis (3) of the discs (1, 2) by a first distance that extends perpendicularly to the rotation axis (3) of the discs (1, 2), and from which the disc set radius (RS), which determines the curvature of the mutually facing sides of the discs (1, 2), is measured, wherein the disc set radius (RS) intersects the rotation axis (3), and **in that**
the curvature of the cradle thrust pieces (6) is determined by a first ratio between a first eccentricity (YP) of the cradle thrust pieces and a first cradle thrust piece radius (RP), said first ratio lying in a range of from 0.185 to 0.205, wherein the first cradle thrust piece radius (RP) is measured from a first point (WP1) which is remote from the longitudinal axis (8) of the cradle thrust pieces (6) by a first distance that extends perpendicularly to the longitudinal axis (8), and by a second ratio which is determined between a second eccentricity (YPA) of the cradle thrust pieces and a second cradle thrust piece radius (RPA) in the azimuthal direction and which lies in a range of from 0 to 0.015, wherein the second cradle thrust piece radius (RPA) is measured from a second point (WP2) which is remote from the longitudinal axis (8) by a distance that corresponds to the second eccentricity (YPA) of the cradle thrust pieces and extends perpendicularly to the longitudinal axis (8) and also perpendicularly to the first distance.

2. Disc set arrangement according to Claim 1, **characterized in that** the eccentricity (YS) of the disc curvature is in a range of from 895 mm to 905 mm.

3. Disc set arrangement according to Claim 2, **characterized in that** the eccentricity (YS) is 900 mm.

4. Disc set arrangement according to one of Claims 1 to 3, **characterized in that** the disc set radius (RS) is between 2000 mm and 10 000 mm.

5. Disc set arrangement according to Claim 4, **characterized in that** the disc set radius is 4000 mm to 6000 mm.

6. Disc set arrangement according to Claim 5, **characterized in that** the disc set radius is 5000 mm.

7. Disc set arrangement according to one of Claims 1 to 6, **characterized in that** the curvature of the cradle thrust pieces (6) is determined by a distance of 39.19 mm, corresponding to the first eccentricity (YP) of the cradle thrust pieces, and a first cradle thrust piece radius (RP) of 200 mm, and by a distance of 0.35 mm, corresponding to the second eccentricity (YPA) of the cradle thrust pieces, and a second cradle thrust piece radius (RPA) of 80 mm.

8. Disc set arrangement according to one of Claims 1 to 7, **characterized in that** the curvature of the first drive input disc set and the curvature of the second drive output disc set are functionally optimized.

9. Disc set arrangement according to one of Claims 1 to 7, **characterized in that** the curvature of the first drive input disc set is functionally optimized and the second drive output disc set has rectilinear flanks.

10. Disc set arrangement according to one of Claims 1 to 7, **characterized in that** the first drive input disc set has rectilinear flanks and the curvature of the second drive output disc set is functionally optimized.

11. Disc set arrangement according to one of Claims 8 to 10, **characterized in that** the rectilinear flank and a perpendicular to the rotation axis of the disc set enclose an angle of between 9° and 13°, preferably 11°.

12. Disc set arrangement according to one of Claims 1 to 11, **characterized in that** it comprises a fixed disc (1) and a moving disc (2).

13. Chain-type CVT transmission, **characterized in that** it contains a disc set arrangement according to one of Claims 1 to 12.

## Revendications

1. Agencement d'ensembles de poulies comprenant un premier ensemble de poulies d'entraînement et un deuxième ensemble de poulies de sortie pour une transmission à variation continue à chaîne, comprenant un profil d'ensemble de poulies fonctionnellement optimisé, les ensembles de poulies de l'agencement d'ensembles de poulies comprenant à chaque fois deux poulies (1, 2) déplaçables axialement l'une par rapport à l'autre sur un arbre (4) et un agencement de chaîne (5) avec des pièces d'appui de bascule (6) agissant entre ces poulies (1, 2), dont l'axe longitudinal (8) s'étend parallèlement à l'axe de rotation (3) de l'arbre (4),
**caractérisé en ce que**
la courbure des poulies (1, 2) d'au moins l'un des ensembles de poulies est déterminée par un rapport entre l'excentricité (YS) de la courbure des poulies et le rayon de l'ensemble de poulies (RS), qui se situe dans une plage de 0,16 à 0,20, l'excentricité (YS) de la courbure des poulies étant définie par un point (SP1) qui est éloigné de l'axe de rotation (3) d'une première distance des poulies (1, 2) s'étendant perpendiculairement à l'axe de rotation (3) des poulies (1, 2) et depuis lequel le rayon de l'ensemble de poulies (RS) définissant la courbure des faces tournées l'une vers l'autre des poulies (1, 2) est mesuré, le rayon de l'ensemble de poulies (RS) s'étendant au-delà de l'axe de rotation (3), et **en ce que**
la courbure des pièces d'appui de bascule (6) est déterminée par un premier rapport entre une première excentricité (YP) des pièces d'appui de bascule et un premier rayon de pièce d'appui de bascule (RP), qui se situe dans une plage de 0,185 à 0,205, le premier rayon de pièce d'appui de bascule (RP) étant mesuré par un premier point (WP1), qui est éloigné de l'axe longitudinal (8) d'une première distance s'étendant perpendiculairement à l'axe longitudinal (8) des pièces d'appui de bascule (6), et par un deuxième rapport qui est déterminé entre une deuxième excentricité (YPA) des pièces d'appui de bascule et un deuxième rayon de pièce d'appui de bascule (RPA) dans la direction azimutale, lequel deuxième rapport se situe dans une plage de 0 à 0,015, le deuxième rayon de pièce d'appui de bascule (RPA) étant mesuré depuis un deuxième point (WP2) qui est éloigné de l'axe longitudinal (8) d'une distance correspondant à la deuxième excentricité (YPA) des pièces d'appui de bascule, laquelle s'étend perpendiculairement à l'axe longitudinal (8) et perpendiculairement à la première distance.

2. Agencement d'ensembles de poulies selon la revendication 1, **caractérisé en ce que** l'excentricité (YS) de la courbure des poulies est comprise dans une plage de 895 mm à 905 mm.

3. Agencement d'ensembles de poulies selon la revendication 2, **caractérisé en ce que** l'excentricité (YS) vaut 900 mm.

4. Agencement d'ensembles de poulies selon l'une quelconque des revendications 1 à 3, **caractérisé en ce que** le rayon de l'ensemble de poulies (RS) est compris entre 2000 mm et 10 000 mm.

5. Agencement d'ensembles de poulies selon la revendication 4, **caractérisé en ce que** le rayon de l'ensemble de poulies est compris entre 4000 mm et 6000 mm.

6. Agencement d'ensembles de poulies selon la revendication 5, **caractérisé en ce que** le rayon de l'ensemble de poulies vaut 5000 mm.

7. Agencement d'ensembles de poulies selon l'une quelconque des revendications 1 à 6, **caractérisé en ce que** la courbure des pièces d'appui de bascule (6) est déterminée par une distance de 39,19 mm correspondant à la première excentricité (YP) des pièces d'appui de bascule et par un premier rayon de pièce d'appui de bascule (RP) de 200 mm et par une distance de 0,35 mm correspondant à la deuxième excentricité (YPA) des pièces d'appui de bascule et par un deuxième rayon de pièce d'appui de bascule (RPA) de 80 mm.

8. Agencement d'ensembles de poulies selon l'une quelconque des revendications 1 à 7, **caractérisé en ce que** la courbure du premier ensemble de poulies d'entraînement et la courbure du deuxième ensemble de poulies de sortie sont fonctionnellement optimisées.

9. Agencement d'ensembles de poulies selon l'une quelconque des revendications 1 à 7, **caractérisé en ce que** la courbure du premier ensemble de poulies d'entraînement est fonctionnellement optimisée et le deuxième ensemble de poulies de sortie présente des flancs rectilignes.

10. Agencement d'ensembles de poulies selon l'une quelconque des revendications 1 à 7, **caractérisé en ce que** le premier ensemble de poulies d'entraînement présente des flancs rectilignes et la courbure du deuxième ensemble de poulies de sortie est fonctionnellement optimisée.

11. Agencement d'ensembles de poulies selon l'une quelconque des revendications 8 à 10, **caractérisé en ce que** les flancs rectilignes et une perpendiculaire à l'axe de rotation de l'ensemble de poulies forment un angle compris entre 9° et 13°, de préférence de 11°.

12. Agencement d'ensembles de poulies selon l'une quelconque des revendications 1 à 11, **caractérisé en ce qu'**il comprend une poulie fixe (1) et une poulie mobile (2).

13. Transmission à variation continue à chaîne, **caractérisée en ce qu'**elle contient un agencement d'ensembles de poulies selon l'une quelconque des revendications 1 à 12.
